(19) Europäisches Patentamt
European Patent Office
Office européen des brevets

(11) Veröffentlichungsnummer: **0 012 342**
**A1**

(12) **EUROPÄISCHE PATENTANMELDUNG**

(21) Anmeldenummer: **79104926.5**

(22) Anmeldetag: **05.12.79**

(51) Int. Cl.[3]: **C 09 B 62/06,** D 06 P 3/66, D 06 P 3/10

(30) Priorität: **16.12.78 DE 2854482**

(43) Veröffentlichungstag der Anmeldung: **25.06.80 Patentblatt 80/13**

(84) Benannte Vertragsstaaten: **CH DE FR GB**

(71) Anmelder: **BAYER AG, Zentralbereich Patente, Marken und Lizenzen, D-5090 Leverkusen 1, Bayerwerk (DE)**

(72) Erfinder: **Harms, Wolfgang, Dr., Walter-Flex-Strasse 21, D-5090 Leverkusen 1 (DE)**
Erfinder: **Wunderlich, Klaus Dr., Carl-Rumpff-Strasse 21, D-5090 Leverkusen 1 (DE)**
Erfinder: **von Oertzen, Klaus, Dr., Hahnenweg 8, D-5000 Koeln 80 (DE)**

(54) **Anthrachinon-Reaktivfarbstoffe und deren Verwendung beim Färben und Bedrucken von hydroxyl- oder amidgruppenhaltigen Materialien.**

(57) Farbstoffe der Formel

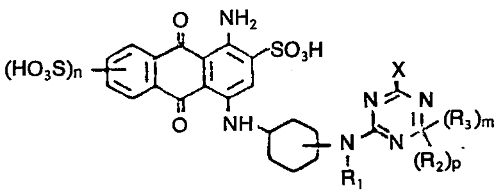

worin
n = 0 oder 1
m,p = 0 oder 1, wobei m + p = 1.
x = Cl oder Br
$R_1$ = H oder Substituent
$R_2$ = $NH_2$, mindestens eine wasserlöslich machende Gruppe aufweisendes Alkylamino, Dialkylamino oder Aralkylamino
$R_3$ = $R_2$ oder Arylamino
wobei für n=o p=1 und für n=1 m=1 ist, deren Herstellung und deren Verwendung zum Färben und Bedrucken von Hydroxyl- oder Amidgruppen enthaltenden Materialien, wie Textilfasern, Fäden und Geweben aus Wolle, Seide, synthetischen Polyamid- und Polyurethanfasern und zum waschechten Färben und Bedrucken von nativer oder regenerierter Cellulose.

EP 0 012 342 A1

ACTORUM AG

BAYER AKTIENGESELLSCHAFT
Zentralbereich
Patente, Marken und Lizenzen

5090 Leverkusen, Bayerwerk
My/Kü

BEZEICHNUNG GEÄNDERT
siehe Titelseite

## Anthrachinon-Reaktivfarbstoffe

Gegenstand der vorliegenden Erfindung sind Reaktivfarbstoffe der Formel

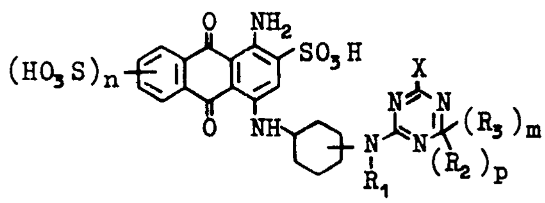

(I)

worin

n = 0 oder 1

m, p = 0 oder 1, wobei m + p = 1

X = Cl oder Br

$R_1$ = H oder Substituent

$R_2$ = $NH_2$, mindestens eine wasserlöslich machende Gruppe aufweisendes Alkylamino, Dialkylamino oder Aralkylamino

$R_3$ = $R_2$ oder Arylamino,

wobei

für n = 0 p = 1 und für n = 1 m = 1 ist.

Die Alkyl-, Aralkyl- und Arylreste können gegebenenfalls weiter substituiert sein.

Geeignete Reste $R_1$ sind neben H insbesondere $C_1$-$C_4$-Alkyl, wie $CH_3$, $C_2H_5$, $C_3H_7$, $C_4H_9$, $CH_2$-$CH_2$-OH, $CH_2$-$CH_2$-$OSO_3H$, $CH_2$-$CH_2$-COOH, $CH_2$-COOH, $CH_2$-$CH_2$-$SO_3H$.

Geeignete wasserlöslich machende Gruppen sind insbesondere $SO_3H$, $OSO_3H$ und COOH.

Geeignete Reste $R_2$ neben $NH_2$ sind $NH-CH_2-SO_3H$, $NH-CH_2-CH_2-SO_3H$, $NH-CH_2-CH_2-OSO_3H$, $NH-CH_2-CH(OSO_3H)-CH_2-Cl$, $N(CH_3)-CH_2-SO_3H$, $N(CH_3)-CH_2-CH_2-SO_3H$, $N(CH_3)-CH_2-CH_2-OSO_3H$, $N(CH_2-CH_2-OSO_3H)_2$, $N(CH_2-CH_2-SO_3H)_2$, $NH-CH_2-COOH$, $N(CH_3)-CH_2-COOH$, $N(CH_2-COOH)_2$, 2-, 3- oder 4-Sulfobenzylamino, 2-(2'-, 3'- oder 4'-Sulfophenyl)-äthylamino, N-Methyl-N-(2-, 3- oder 4-sulfobenzyl)-amino.

Geeignete Reste $R_3$ sind beispielsweise Arylaminogruppen, wie Phenylamino, 2-, 3- oder 4-Sulfophenylamino, 2,4-, 2,5-, 3,5- oder 3,4-Disulfophenylamino, 2-, 3-, 4-Carboxyphenylamino, 2-Carboxy-4- oder -5-sulfophenylamino, 3-Carboxy-5-sulfophenylamino, 2-Methyl-4,5-disulfophenylamino, 4-Methyl-2- oder -3-sulfophenylamino, 2-Methyl-4- oder -5-sulfophenylamino, 2,6-Dimethyl-3- oder -4-sulfophenylamino, 2,4-Dimethyl-6-sulfophenylamino, 2-Chlor-4- oder -5-sulfophenylamino, 3-Chlor-2-methyl-6-sulfophenylamino, 4-Methoxy-2- oder -3-sulfophenylamino, 2-Methoxy-5-sulfophenylamino, 2-(ß-Hydroxyäthoxy)-5-sulfophenylamino, 4-(ß-Hydroxyäthoxy)-2- oder -3-sulfophenylamino, 4-Sulfomethylphenylamino, 2-, 3- oder 4-Methylphenylamino, 2-, 3- oder 4-Chlorphenylamino, 2-, 3- oder 4-Methoxyphenylamino, 3- oder 4-Nitrophenylamino, 2-, 3- oder 4-Acetylamino-phenylamino, 4-N-Methyl-N-acetyl-phenylamino, N-Methylphenylamino, N-Methyl-2-methyl-5-sulfophenylamino, N-Methyl-3-sulfophenylamino, N-(ß-Hydroxyäthyl)-phenylamino, N-Äthyl-phenylamino, N-ß-Sulfoäthyl-phenylamino, 1-, 3-, 4-, 5-, 6-, 7- oder 8-Sulfo-2-naphthylamino, 2-, 3-, 4-, 5-, 6-, 7- oder 8-Sulfo-1-naphthylamino, 1,5-, 2,6-, 4,8-, 5,7- oder 6,8-Disulfo-2-naphthylamino, 2,4-, 3,7-, 3,8-, 4,8-, 5,7- oder 6,8-Disulfo-1-naphthylamino, 1,5,7- oder 3,6,8-Trisulfo-2-naphthylamino, 3,5,7- oder 3,6,8-Trisulfo-1-naphthylamino.

Bevorzugte Farbstoffe im Rahmen der Formel (I) sind solche der

Formel

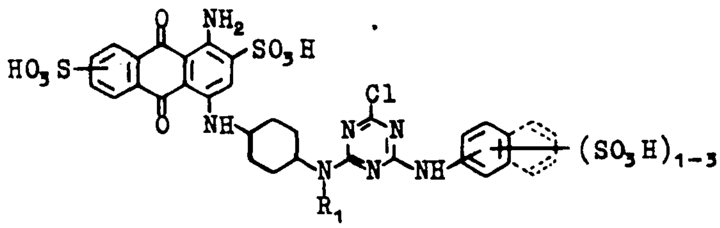

(II)

worin $R_1$ die oben angegebene Bedeutung hat.

Die neuen Farbstoffe werden erhalten, indem man Aminocyclohexylaminoverbindungen der Formel

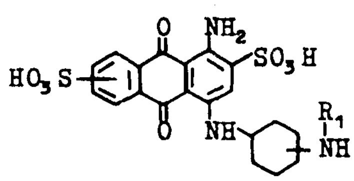

(III)

worin $R_1$ die obenangegebene Bedeutung hat, mit 6-substituierten 2,4-Dihalogentriazinylverbindungen der Formel,

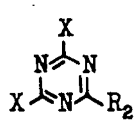

(IV)

worin

X und $R_2$ die oben angegebene Bedeutung haben, kondensiert oder indem man Aminocyclohexylaminoverbindungen der Formel (III) zunächst mit Cyanurchlorid oder -bromid zu Verbindungen der Formel

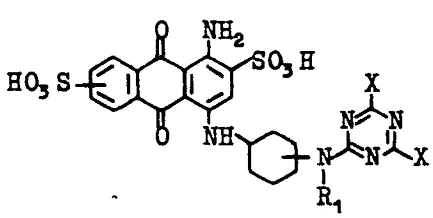

(V)

umsetzt und anschließend mit aktiven Wasserstoff enthaltenden Verbindungen der Formel,

$$H-R_2 \qquad (VI)$$

worin $R_2$ die oben angegebene Bedeutung hat, unter HX-Austritt kondensiert.

Die Umsetzung der Aminocyclohexylaminoanthrachinonverbindungen (III) mit den 6-substituierten 2,4-Dihalogentriazinen (IV) wird in wäßrigem oder wäßrig-organischem Medium bei Temperaturen von -10° bis 80°, vorzugsweise bei 10-50°, und bei pH-Werten von 5-12, vorzugsweise 7-11, in Gegenwart alkalischer Mittel, wie wäßrigen Alkalihydroxid-, Alkalicarbonat- oder Alkaliphosphatlösungen, durchgeführt.

Die Kondensation der Aminocyclohexylaminoanthrachinonverbindungen der Formel (III) mit Cyanurchlorid oder -bromid wird in wäßrigem oder wäßrig-organischem Medium bei Temperaturen von 0-50°, vorzugsweise 0-30°, und pH-Werten von 5-11 vorzugsweise 7-10, die Kondensation der Dihalogentriazinylanthrachinonverbindungen (V) mit den Verbindungen der Formel (VI) bei Temperaturen von 0-80°, vorzugsweise 10-60°, und pH-Werten von 4-11, vorzugsweise 5-9, in Gegenwart der oben genannten alkalischen Kondensationsmittel durchgeführt.

Die neuen Farbstoffe sind äußerst wertvolle Produkte, die sich für verschiedenste Anwendungszwecke eignen. Als wasserlösliche Verbindungen finden sie bevorzugtes Interesse für das Färben hydroxylgruppenhaltiger und stickstoffhaltiger Textilmaterialien, insbesondere von Textilmaterialien aus nativer und regenerierter Cellulose, ferner aus Wolle, Seide, synthetischen Polyamid- und Polyurethanfasern.

Die genannten Materialien werden nach den für Reaktivfarbstoffe üblichen Verfahren gefärbt oder bedruckt. Man erhält licht- und

naßechte brillante blaue Färbungen und Drucke.

Bei Temperaturangaben in den Beispielen handelt es sich um °C. Die Formeln der Farbstoffe in der Beschreibung und den Beispielen sind die der freien Säuren. Die Farbstoffe werden im allgemeinen in Form ihrer Alkalisalze, insbesondere der Natrium- oder Kaliumsalze, isoliert und angewandt.

Beispiel 1

A. 9,9 g 2-Aminobenzol-1,4-disulfonsäure werden in 30 ml Wasser durch Zugabe von ca. 20 ml 2n Sodalösung bei 20° gelöst. Nach Einstellung eines pH-Wertes von 5,5 gibt man 7,2 g Cyanurchlorid hinzu und hält den pH-Wert bei kräftigem Rühren auf 5,0-5,5. Wenn die Umsetzung nach etwa 2 Stunden beendet ist, wird die erhaltene Lösung geklärt.

B. 16,9 g 1-Amino-4-(4'-amino-cyclohexylamino)-anthrachinon-2,6-disulfonsäure werden in 80 ml Wasser bei pH 9 mit ca. 2,3 ml 40%iger Natronlauge gelöst. Zu dieser Farbstofflösung läßt man innerhalb von 20 Minuten die oben hergestellte Lösung der Reaktivkomponente gleichmäßig zutropfen und hält mit 2n Natronlauge in der Reaktionslösung den pH-Wert auf 8,5-9,0. Wenn die Kondensation nach mehrstündigem Nachrühren beendet ist, wird die Farbstofflösung allmählich mit 20 % Kaliumchlorid versetzt. Der ausgefallene Farbstoff der Formel

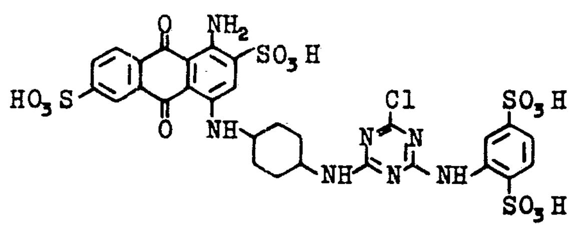

wird abgesaugt, mit 25%iger Kaliumchloridlösung gewaschen und bei 50° im Vakuum getrocknet.

C. Cellulosegewebe wird mit einer Druckpaste bedruckt, die im Kilogramm 40 g des obigen Farbstoffes, 100 g Harnstoff, 300 ml Wasser, 500 g Alginatverdickung sowie 20 g Soda enthält und mit Wasser auf 1 Kilogramm aufgefüllt wurde. Man trocknet anschließend, dämpft 2 Minuten bei 105°, spült mit heißem Wasser und seift danach kochend. Nach dem Spülen und Trocknen liegt

ein brillanter, blauer Druck mit sehr guten Licht- und Naßechtheiten vor.

D. Zur Färbung nach dem Klotz-Verfahren werden 100 g Baumwollgewebe bei Raumtemperatur mit einer wässrigen Lösung, die 30 g/Liter Farbstoff, 20 g/Liter Soda und 150 g/Liter Harnstoff enthält, foulardiert, zwischengetrocknet, 2 Minuten auf 140° erhitzt, danach gespült und kochend geseift. Das Gewebe wird in brillanten, licht- und naßechten Blautönen gefärbt. Statt auf 140° zu erhitzen, kann man das foulardierte Gewebe auch 8 Minuten bei 102-105° dämpfen.

Beispiel 2

A. 8,3 g Cyanurchlorid werden in 50 ml Aceton gelöst und durch Aufgießen auf 50 g Eis als Suspension gefällt. Man läßt nun eine auf pH 5 gestellte Lösung von 7,8 g 4-Aminobenzolsulfonsäure in 60 ml Wasser zu der Cyanurchloridsuspension bei 0-5° zutropfen und hält dabei den pH-Wert mit 2n Sodalösung auf 4,5-5,0. Man rührt etwa 30 Minuten nach, bis die Kondensation beendet ist.

B. Man läßt die erhaltene Lösung zu einer auf 20-25° befindlichen Lösung von 19,1 g 1-Amino-4-(4'-amino-cyclohexylamino)-anthrachinon-2,7-disulfonsäure, die auf pH 9,5 gestellt wurde, in 30 Minuten zulaufen und hält den pH-Wert im Reaktionsgemisch mit 2n Natronlauge auf 8,8-9,2. Durch mehrstündiges Nachrühren bei 20-25° wird die Kondensation zu Ende geführt. Der erhaltene Farbstoff der Formel

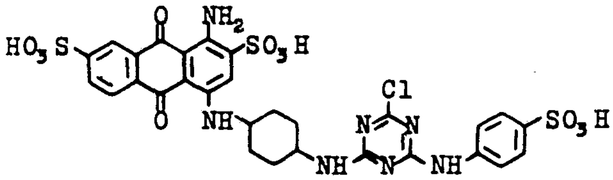

wird mit 15 % Kaliumchlorid ausgesalzen, die Fällung abgesaugt und der Filterkuchen mit 15 % Kaliumchloridlösung gewaschen. Man trocknet das Filtergut bei 50° im Vakuum.

Der Farbstoff ergibt nach den Verfahren des Beispiels 1 auf Cellulosegewebe brillante blaue Drucke und Färbungen, die sehr gute Licht- und Naßechtheiten aufweisen.

C. Zur Färbung aus langer Flotte werden 50 g Baumwollstrang in 1 Liter Färbeflotte, die 1,5 g obigen Farbstoffes enthält, gefärbt, indem man innerhalb von 30 Minuten auf 80° heizt, 100 g Natriumsulfat in mehreren Anteilen zugibt, anschließend 20 g Soda zufügt und 60 Minuten bei dieser Temperatur behandelt. Nach dem Spülen, kochenden Seifen und Trocknen erhält man eine brillante, blaue Färbung von ausgezeichneten Licht- und Naßechtheiten, insbesondere auch der Chlorechtheit.

Beispiel 3

A. 9,0 g Cyanurchlorid werden in 50 ml Aceton gelöst. Man gießt die Lösung auf 50 g Eis und läßt zu der erhaltenen Suspension bei 0-5° eine auf pH 5 gestellte Lösung von 12,3 g 4-Aminobenzol-1,3-disulfonsäure zulaufen. Man hält den pH-Wert im Reaktionsgemisch mit 2n Sodalösung auf 4,5-5,5 und führt die Kondensation durch dreistündiges Nachrühren zu Ende.

B. 20,5 g 1-Amino-4-(4'-amino-cyclohexylamino)-anthrachinon-2,5-disulfonsäure werden in 400 ml Wasser suspendiert und durch Zugabe von 4n Natronlauge bis zum pH-Wert von 9,5 gelöst. Zu der Lösung läßt man die Lösung der oben hergestellten Reaktivkomponente bei 20-25° zulaufen und hält den pH-Wert mit 2n Natronlauge auf 9,0-9,3. Man rührt mehrere Stunden nach, bis die Kondensation beendet ist. Der Farbstoff wird durch Sättigen der Lösung mit Natriumchlorid ausgesalzen, abgesaugt, mit gesättigter Natriumchloridlösung gewaschen und bei 50° im Vakuum getrocknet. Der Farbstoff entspricht der Formel

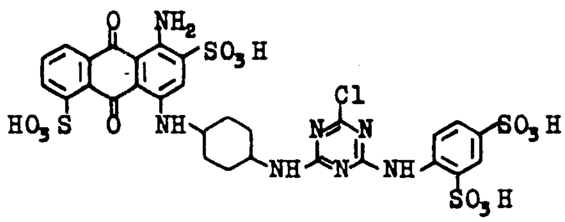

und gibt auf Baumwolle oder Zellwolle brillante, blaue Drucke mit sehr guten Echtheitseigenschaften.

Beispiel 4

Ersetzt man im Beispiel 2 die 4-Aminobenzolsulfonsäure und die 1-Amino-4-(4'-amino-cyclohexylamino)-anthrachinon-2,7-disulfonsäure durch äquivalente Mengen an 3-Aminobenzolsulfonsäure und 1-Amino-4-(4'-amino-cyclohexylamino)-anthrachinon-2,6-disulfonsäure, so erhält man einen Farbstoff der Formel,

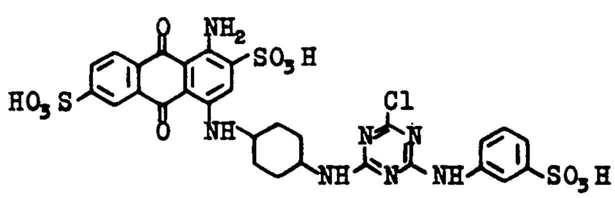

der dem Farbstoff des Beispiels 2 coloristisch sehr ähnlich ist.

Den gleichen Farbstoff kann man erhalten, wenn man die Anthrachinonkomponente zunächst bei pH 8,5-8,7 und 0-5° mit Cyanurchlorid kondensiert und anschließend den Dichlortriazinylanthrachinon-Farbstoff bei 35° mit 3-Aminobenzolsulfonsäure umsetzt.

Beispiel 5

A. 10,0 g Cyanurchlorid werden in 50 ml Aceton gelöst und die Lösung auf 50 g Eis gegeben. Zur erhaltenen Cyanurchloridsuspension läßt man in 15 Minuten eine auf pH 6,5 gestellte Lösung von 6,7 g 2-Aminoäthansulfonsäure bei 0-5° zutropfen und hält im Reaktionsgemisch den pH-Wert mit 2n Sodalösung auf 6,4-6,7. Man rührt bei 0-5° in dem angegebenen pH-Bereich etwa 1 1/2 Stunden nach. Danach ist eine klare Lösung entstanden.

B. 22,0 g 1-Amino-4-(4'-amino-cyclohexylamino)-anthrachinon-2,7-disulfonsäure werden in 330 ml Wasser bei pH 9,5 und 35° gelöst. Zur Lösung der Farbstoffkomponente läßt man in 2 1/2 Stunden die oben hergestellte Lösung des Natriumsalzes der Dichlortriazinylaminoäthansulfonsäure zutropfen. Man hält dabei den pH-Wert mit 2n Natronlauge auf 9,3-9,5 und die Temperatur weiter auf 35°. Durch mehrstündiges Nachrühren unter diesen Bedingungen führt man die Reaktion zu Ende, was man durch chromatographische Kontrolle überprüft. Der erhaltene Farbstoff der Formel

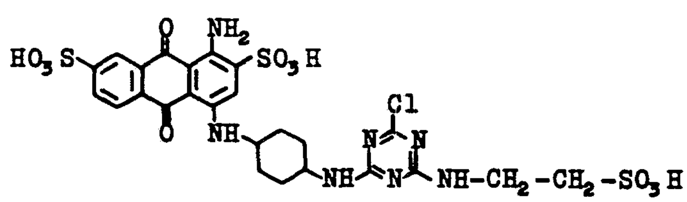

wird bei 20° mit 20 % Kaliumchlorid ausgesalzen, abgesaugt, mit 20%iger Kaliumchloridlösung gewaschen und bei 60° im Umluftschrank getrocknet.

Den gleichen Farbstoff erhält man, wenn man 1-Amino-4-(4'-amino-cyclohexylamino)-anthrachinon-2,7-disulfonsäure zunächst bei pH 8,5-8,7 und 0-5° mit Cyanurchlorid kondensiert und darauf das erhaltene Zwischenprodukt bei 35° mit 2-Aminoäthansulfonsäure umsetzt.

Der Farbstoff ergibt auf Cellulosegewebe klare, blaue Drucke.

Beispiel 6

Ersetzt man im Beispiel 5 die 1-Amino-4-(4'-amino-cyclohexylamino)-anthrachinon-2,7-disulfonsäure durch eine äquivalente Menge der 1-Amino-4-(4'-amino-cyclohexylamino)-anthrachinon-2,6-disulfonsäure, so erhält man einen Farbstoff der Formel,

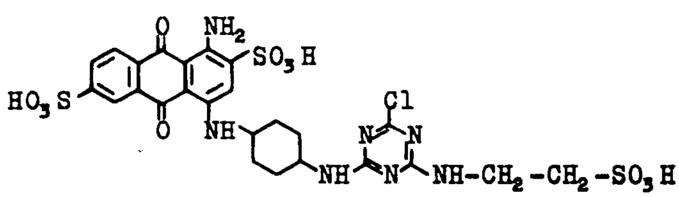

der dem Farbstoff des Beispiels 5 in seinen coloristischen Eigenschaften sehr ähnlich ist und nach dem Druckverfahren des Beispiels 1 C licht- und naßechte klare, blaue Drucke liefert.

Beispiel 7

A. 9,4 g Cyanurchlorid werden in 50 ml Aceton gelöst. Man gibt auf 50 g Eis, läßt zu der Cyanurchloridsuspension in 15 Minuten eine auf pH 7 gestellte Lösung von 7,0 g Schwefelsäure-mono-(2-aminoäthylester) in 70 ml Wasser bei 0-5° zutropfen und hält den pH-Wert mit 2n Sodalösung auf 6,8-7,0. Nach dem Eintropfen rührt man noch etwa 45 Minuten unter den angegebenen Bedingungen nach. Es ist eine klare Lösung entstanden.

B. 21,0 g 1-Amino-4-(4'-amino-cyclohexylamino)-anthrachinon-2,6-disulfonsäure werden in 300 ml Wasser bei pH 9 und 35° gelöst. Zu dieser Lösung läßt man die oben hergestellte Lösung der Reaktivkomponente in 40 Minuten bei 35° zutropfen und hält den pH-Wert mit 2n Natronlauge auf 8,5-8,7. Man rührt mehrere Stunden nach, bis eine chromatographische Probe die vollständige Umsetzung der Anthrachinonkomponente anzeigt. Der Farbstoff wird nun mit 22 % Kaliumchlorid ausgesalzen, abgesaugt, mit 20%iger Kaliumchloridlösung gewaschen und bei 50° im Vakuum getrocknet.

Er entspricht der Formel

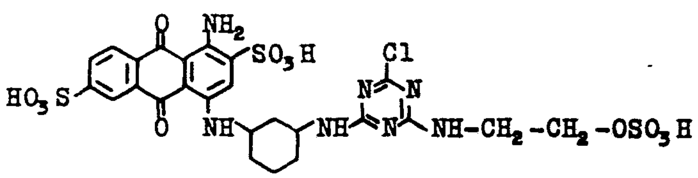

und gibt auf Baumwolle sehr licht- und naßechte, klare, blaue Drucke.

Analog den vorangegangenen Beispielen erhält man weitere Reaktivfarbstoffe, die auf Cellulosefasern brillante, blaue Drucke oder Färbungen liefern, wenn man die in Tabelle I aufgeführten Anthrachinonverbindungen und 6-substituierten 2,4-Dichlortriazine kondensiert.

Tabelle I

| Nr. | Anthrachinonkomponente | Reaktivkomponente |
|---|---|---|
| 8 | 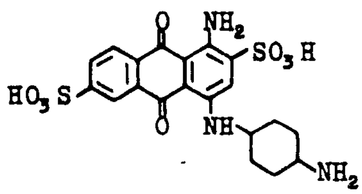 | 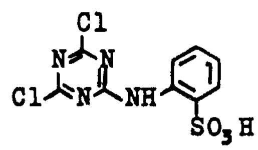 |
| 9 | 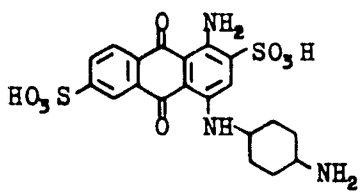 | 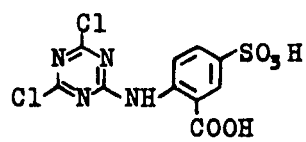 |
| 10 | 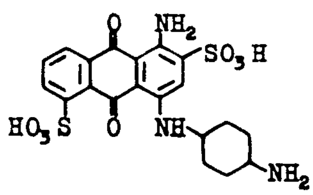 | 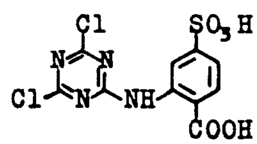 |
| 11 | 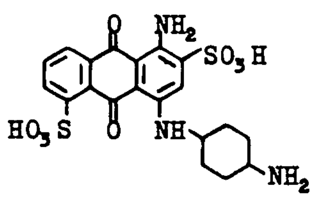 | 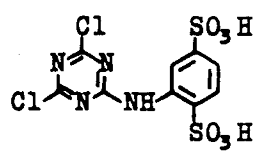 |
| 12 | 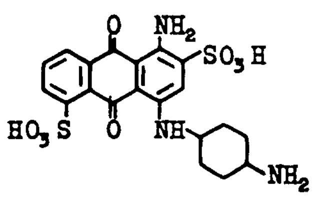 | 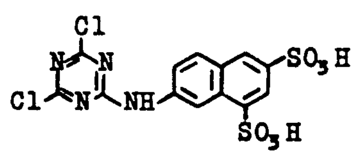 |

Tabelle I

| Nr. | Anthrachinonkomponente | Reaktivkomponente |
|---|---|---|
| 13 | 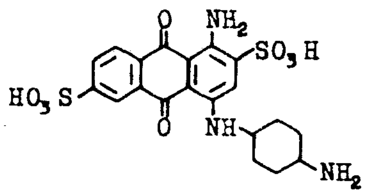 | 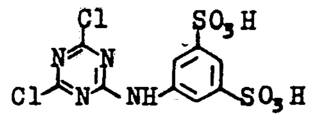 |
| 14 | 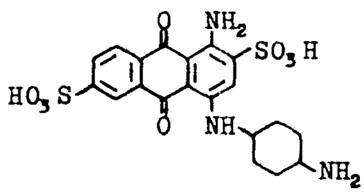 | 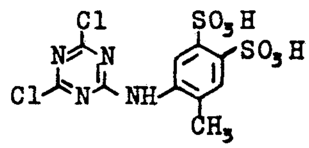 |
| 15 | 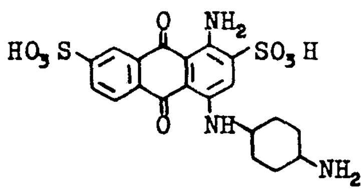 | 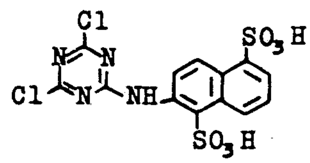 |
| 16 | 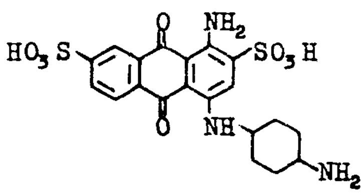 | 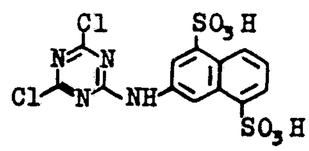 |
| 17 | 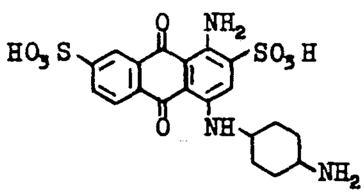 | 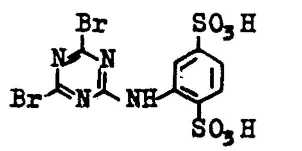 |
| 18 | 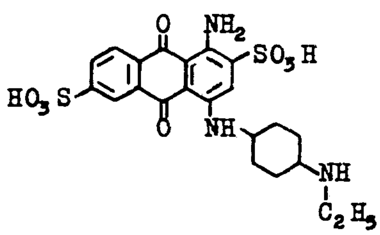 | 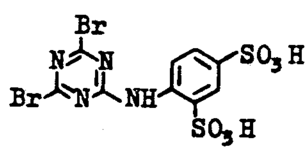 |

Tabelle I

| Nr. | Anthrachinonkomponente | Reaktivkomponente |
|---|---|---|
| 19 | 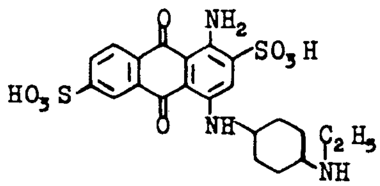 | 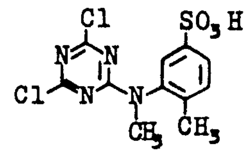 |
| 20 | 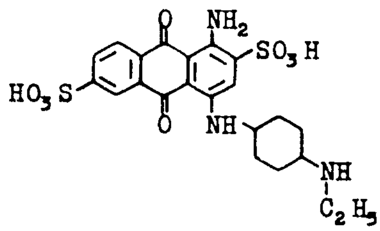 | 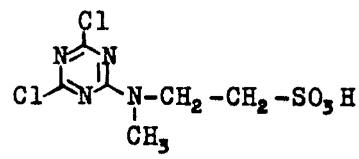 |
| 21 | 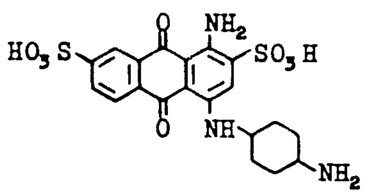 | 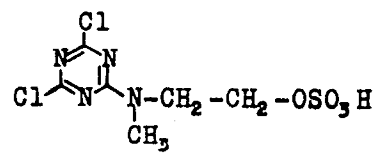 |
| 22 | 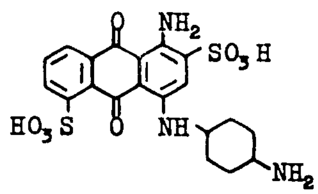 | 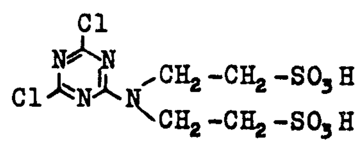 |
| 23 | 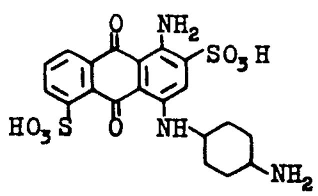 | 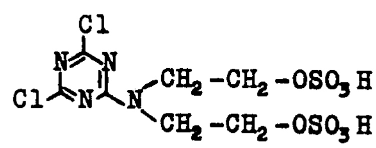 |
| 24 | 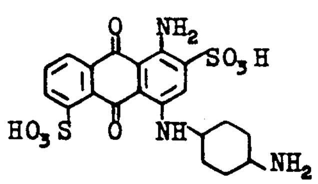 | 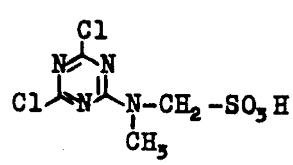 |

Tabelle I

| Nr. | Anthrachinonkomponente | Reaktivkomponente |
|---|---|---|
| 25 | 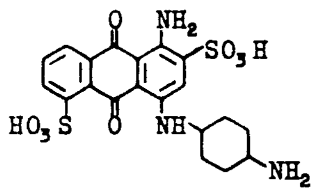 | 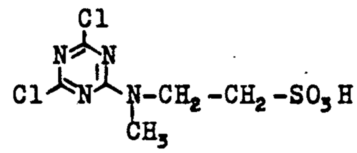 |
| 26 | 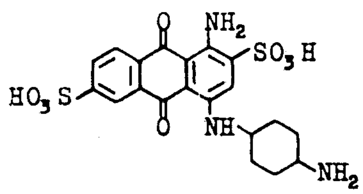 | 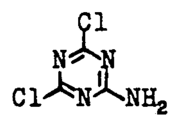 |
| 27 | 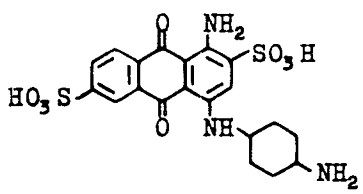 | 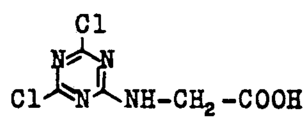 |
| 28 | 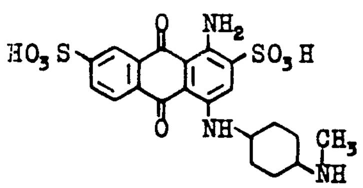 | 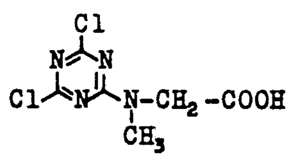 |
| 29 | 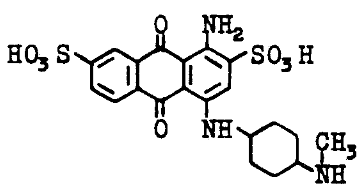 | 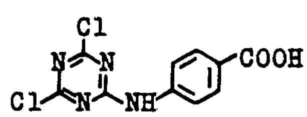 |
| 30 | 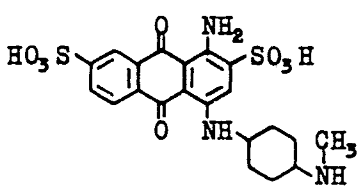 | 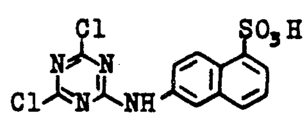 |

Tabelle I

| Nr. | Anthrachinonkomponente | Reaktivkomponente |
|---|---|---|
| 31 | 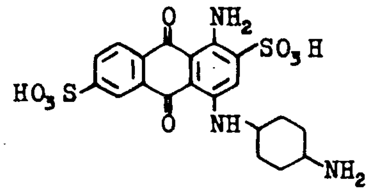 | 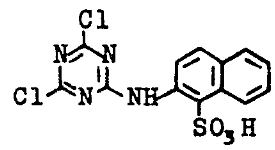 |
| 32 | 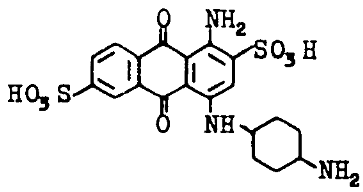 | 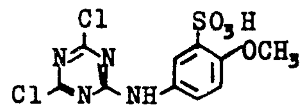 |
| 33 | 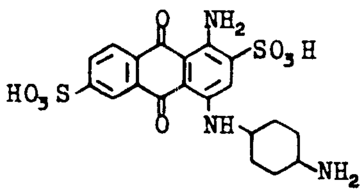 | 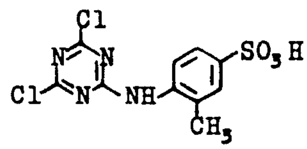 |
| 34 | 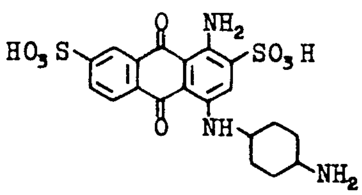 | 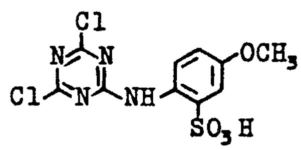 |
| 35 | 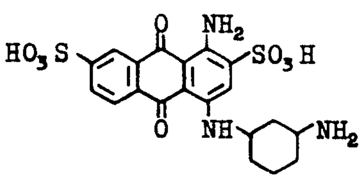 | 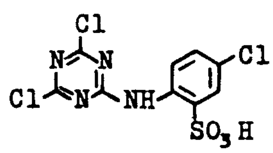 |
| 36 | 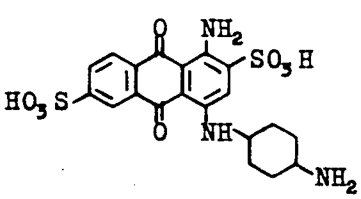 | 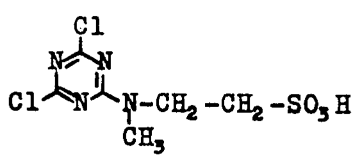 |

Beispiel 37

A. 7,4 g Cyanurchlorid werden in 30 ml Aceton gelöst. Man gibt die Lösung auf 30 g Eis und läßt eine auf pH 6,5-7 gestellte Lösung von 5,0 g 2-Aminoäthansulfonsäure in 30 ml Wasser in 20 Minuten bei 0-5° zutropfen. Dabei wird der pH-Wert mit 2n Sodalösung auf 6,5-6,7 gehalten. Man rührt noch etwa 1 Stunde unter den angegebenen Bedingungen nach. Das Cyanurchlorid ist umgesetzt, und es ist eine klare Lösung entstanden.

B. 14,2 g 1-Amino-4-(4'-amino-cyclohexylamino)-anthrachinon-2-sulfonsäure werden in 200 ml Wasser bei 60° durch Zugabe von 12 ml 4n Natronlauge gelöst.

Diese Lösung läßt man gleichzeitig mit der hergestellten Lösung der Reaktivkomponente so in 80 ml vorgelegtes Wasser bei 40° eintropfen, daß der pH-Wert in der Mischung sich auf 9,3-9,5 einstellt. Nach Eintropfen der Farbstoffkomponente wird dieser pH-Bereich weiter durch Zutropfen von 2n Natronlauge eingehalten. Man rührt einige Stunden bis zur Beendigung der Kondensation nach. Der erhaltene Farbstoff der Formel

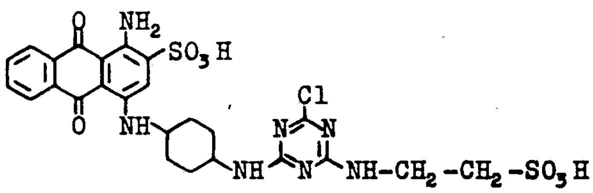

wird mit Natriumchlorid ausgesalzen, abgesaugt, mit 10%iger Natriumchloridlösung gewaschen und bei 50° im Vakuum getrocknet.

Er gibt auf Baumwolle und Zellwolle nach dem Verfahren des Beispiels 1 C klare, blaue Drucke mit sehr guten Echtheitseigenschaften.

Beispiel 38

A. 5,5 g Cyanurchlorid werden in 40 ml Aceton gelöst. Man gießt die Lösung auf 40 g Eis und läßt zu der Cyanurchloridsuspension bei 0-5° eine auf pH 10 gestellte Lösung von 13,4 g 1-Amino-4-(4'-amino-cyclohexylamino)-anthrachinon-2,5-disulfonsäure in 300 ml Wasser im Laufe von 30 Minuten zutropfen. Dabei hält man den pH-Wert mit 2n Sodalösung auf 8,0-8,5. Man rührt etwa 2 Stunden nach, danach ist die Kondensation beendet. Man erwärmt auf 20-25°.

B. Anschließend läßt man eine auf pH 6-7 gestellte Lösung von 2,6 g 3-Aminobenzolsulfonsäure und 2,6 g 4-Aminobenzolsulfonsäure in 50 ml Wasser zutropfen und steigert dann die Temperatur auf 35°. Während dieser Arbeitsschritte hält man den pH-Wert mit 2n Natronlauge auf 7,5-8,0. Die Kondensation zwischen Dichlortriazinylanthrachinonverbindung und den Aminobenzolsulfonsäuren wird durch mehrstündiges Nachrühren bei 35° zu Ende geführt. Der entstandene Farbstoff der Formel

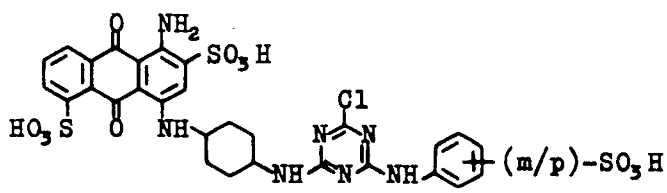

wird mit 15 % Kaliumchlorid ausgesalzen, gewaschen und bei 50° im Vakuum getrocknet.

Beispiel 39

A. 11,6 g Cyanurchlorid werden in 60 ml Aceton gelöst. Man gibt

die Lösung auf 60 g Eis und läßt nun eine auf pH 9 gestellte Lösung von 28,0 g 1-Amino-4-(4'-amino-cyclohexylamino)-anthrachinon-2,6-disulfonsäure in 180 ml Wasser im Laufe von 45 Minuten bei 0-5° zu der Cyanurchloridsuspension zulaufen. Dabei wird der pH-Wert im Reaktionsgemisch mit 2n Natronlauge auf 8,5-9,0 gehalten. Nach dem Eintropfen rührt man etwa 2 Stunden bei 0-5° nach.

B. Nach Beendigung der Umsetzung gibt man zur erhaltenen Lösung 6,8 g N-Methylanilin und steigert die Temperatur auf 35°. Der pH-Wert wird weiter auf 8,0-8,5 gehalten. Nach etwa 30-60 Minuten ist die Kondensation zwischen Dichlortriazinyl-anthrachinonkomponente und N-Methylanilin beendet. Man läßt 80 ml 25%ige Natriumchloridlösung langsam zutropfen, saugt den ausgefallenen Farbstoff ab, wäscht ihn mit 10%iger Natriumchloridlösung und trocknet ihn bei 50° im Vakuum. Der Farbstoff entspricht der Formel

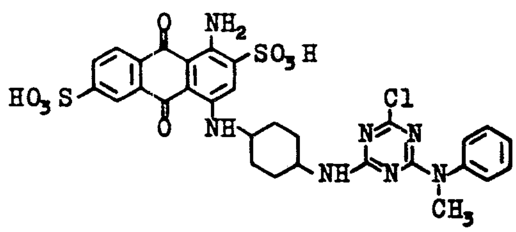

Er gibt nach den Verfahren des Beispiels 1 auf Baumwolle klare, blaue, sehr licht- und naßechte Drucke und Färbungen.

Beispiel 40

A. 18,0 g Cyanurchlorid werden in 90 ml Aceton gelöst. Man gießt die Lösung auf 90 g Eis und läßt zu der Suspension eine Lösung von 39,9 g 1-Amino-4-(4'-amino-cyclohexylamino)-anthrachinon-2-sulfonsäure in 690 ml Wasser und 51,0 ml 2n Natronlauge bei 0-5° so zutropfen, daß sich ein pH-Wert von 8,0-8,5 im Reaktionsgemisch einstellt. Nach dem Eintropfen hält man diesen pH-Wert weiter mit 2n Natronlauge ein und rührt etwa 2 Stunden nach, bis die Kondensation beendet ist.

B. Man erwärmt nun die Lösung der Dichlortriazinylanthrachinonkomponente auf 20° und stellt den pH-Wert auf 7,5 ein. Man setzt eine auf pH 6,5 gestellte Lösung von 12,3 g Methylaminomethansulfonsäure in 45 ml Wasser hinzu, erwärmt das Gemisch auf 35° und hält den pH-Wert durch Zutropfen von 2n Natronlauge auf 7,0-7,5. Ist die Kondensation beendet, wird die Lösung im Rotationsverdampfer zur Trockene eingedampft oder die Farbstofflösung einer Sprühtrocknung unterworfen. Das erhaltene Pulver enthält den Farbstoff der Formel

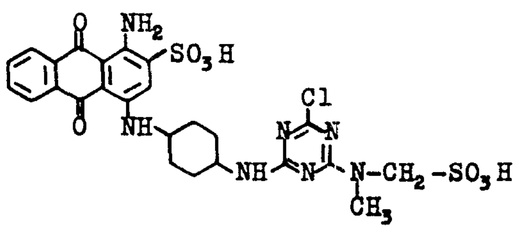

Der Farbstoff gibt auf Cellulosegewebe nach den Verfahren des Beispiels 1 licht- und naßechte, klare, blaue Drucke und Färbungen.

## Beispiel 41

A. 5,8 g Cyanurchlorid werden analog der im Beispiel 39 beschriebenen Weise mit 14,1 g 1-Amino-4-(4'-amino-cyclohexylamino)-anthrachinon-2,7-disulfonsäure bei 0-5° und pH 8,0-8,5 kondensiert.

B. 4,0 g Methylaminomethansulfonsäure werden in 40 ml Wasser bei pH 6 gelöst. Man läßt diese Lösung in 20 Minuten zu der auf 35° gehaltenen Lösung der Dichlortriazinylanthrachinonverbindung zulaufen und hält im Reaktionsgemisch den pH-Wert auf 7,0-7,5. Man rührt noch 1 1/2 Stunden nach und dampft nun die Lösung im Rotationsverdampfer bei 12 Torr ein. Das zurückbleibende blaue Pulver enthält den Farbstoff der Formel

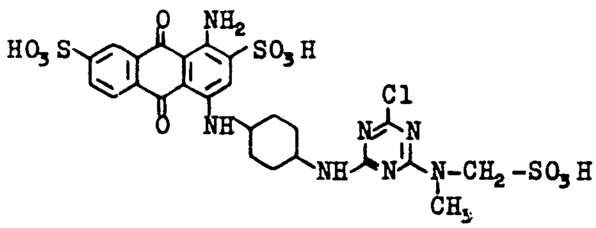

Mit ihm werden auf Cellulosegewebe klare blaue Drucke und Färbungen mit ausgezeichneten Echtheitseigenschaften erhalten.

In analoger Weise erhält man weitere Reaktivfarbstoffe, wenn man die in Tabelle II aufgeführten Anthrachinonverbindungen mit Cyanurchlorid kondensiert und die erhaltenen Dichlortriazinylanthrachinonverbindungen mit den in der 3. Spalte der Tabelle angegebenen Aminkomponenten im Molverhältnis 1:1 umsetzt. Die erhaltenen Reaktivfarbstoffe geben auf Cellulosegewebe licht- und naßechte, brillante blaue Drucke und Färbungen.

Tabelle II

| Nr. | Anthrachinonkomponente | Aminkomponente |
|---|---|---|
| 42 | 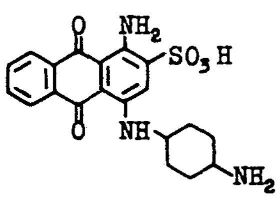 | $NH_2-CH_2-CH_2-OSO_3H$ |
| 43 | 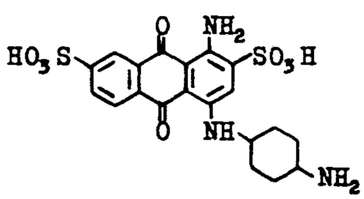 | 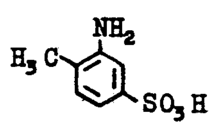 |

<u>Tabelle II</u>

| Nr. | Anthrachinonkomponente | Aminkomponente |
| --- | --- | --- |
| 44 | 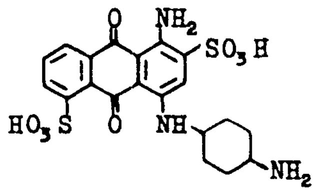 | $CH_3-NH-CH_2-COOH$ |
| 45 | 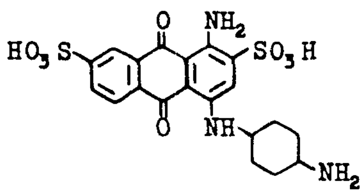 | 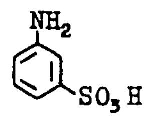 |
| 46 | 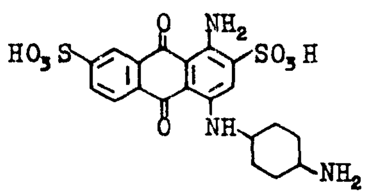 | $CH_3-NH-CH_2-CH_2-OSO_3H$ |
| 47 | 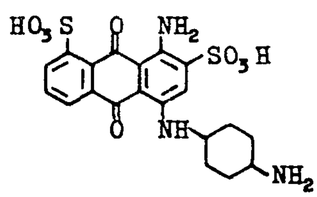 | 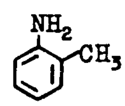 |
| 48 | 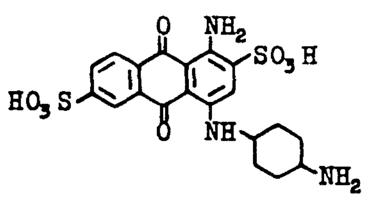 | 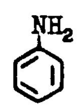 |
| 49 | 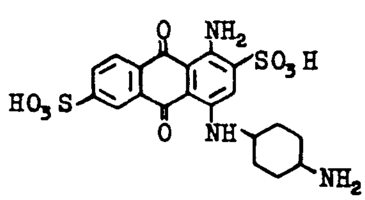 | 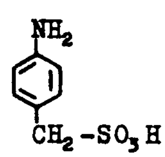 |

Tabelle II

| Nr. | Anthrachinonkomponente | Aminkomponente |
|---|---|---|
| 50 | 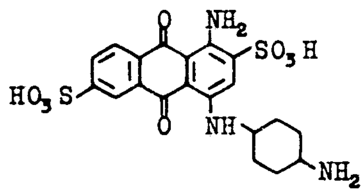 | 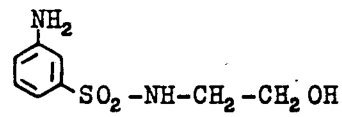 |
| 51 | 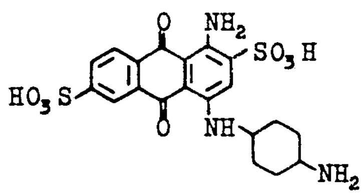 | 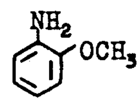 |
| 52 | 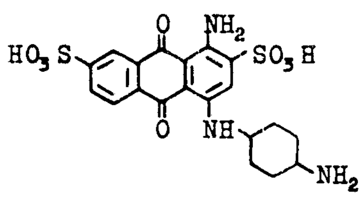 | 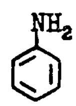 |
| 53 | 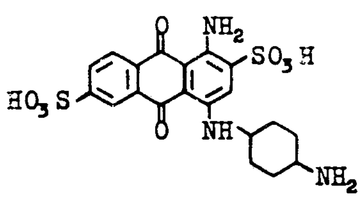 | 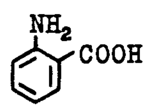 |
| 54 | 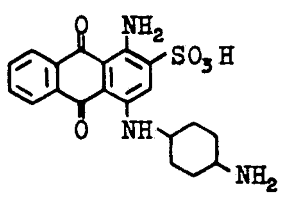 | $HN(CH_2-COOH)_2$ |
| 55 | 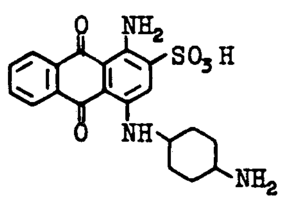 | $CH_3NH-CH_2-CH_2-OSO_3H$ |

Tabelle II

| Nr. | Anthrachinonkomponente | Aminkomponente |
|---|---|---|
| 56 | 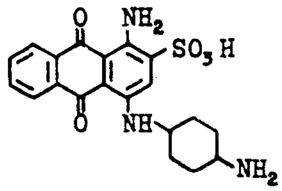 | $CH_3-NH-CH_2-CH_2-SO_3H$ |
| 57 | 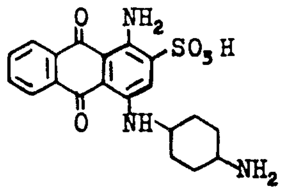 | $HN(CH_2-CH_2-SO_3H)_2$ |
| 58 | 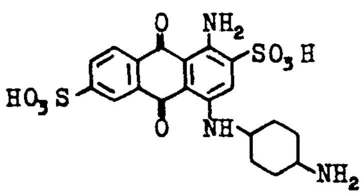 | $NH_3$ |
| 59 | 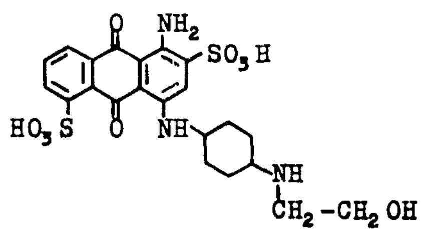 | 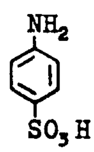 |
| 60 | 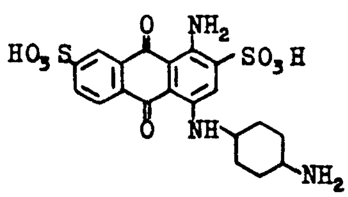 | 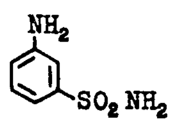 |
| 61 | 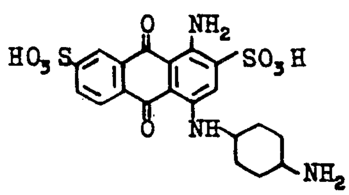 | 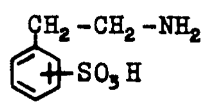 |

Tabelle II

| Nr. | Anthrachinonkomponente | Aminkomponente |
|---|---|---|
| 62 | 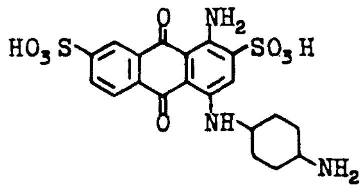 | 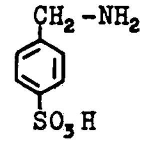 |
| 63 | 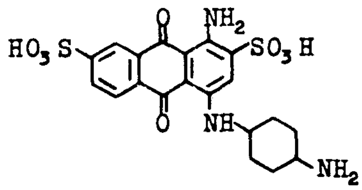 | 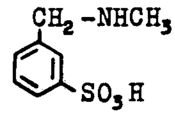 |
| 64 | 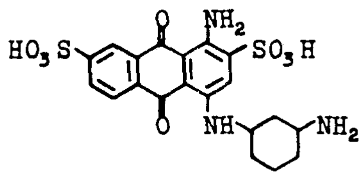 | 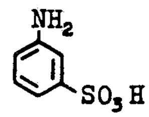 |

Beispiel 65

A. 5,8 g Cyanurchlorid werden in 30 ml Aceton gelöst und auf 30 g Eis gegeben. Zu der Cyanurchloridsuspension läßt man bei 0-5° eine auf pH 9 gestellte Lösung von 14,1 g 1-Amino-4-(4'-amino-cyclohexylamino)-anthrachinon-2,7-disulfonsäure in 200 ml Wasser in 30 Minuten zulaufen und hält den pH-Wert mit 2n Natronlauge auf 8,0-8,5. Nach etwa 2 Stunden ist die Kondensation zwischen Cyanurchlorid und Farbstoffkomponente beendet. Man erwärmt nun die Lösung auf 20°.

B. 1,7 g Ammoniumchlorid werden in 20 ml Wasser gelöst und zur Dichlortriazinylverbindung gegeben. Man erwärmt das Reaktionsgemisch auf 45° und hält den pH-Wert weiter auf 8,5-9,0. Nach Beendigung der Kondensation wird der Farbstoff der Formel

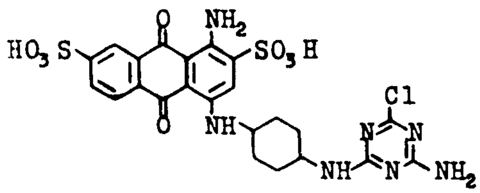

mit 15 % NaCl ausgesalzen, die Fällung abgesaugt, der Filterkuchen mit 15%iger Natriumchloridlösung gewaschen und im Vakuum bei 50° getrocknet. Der Farbstoff gibt auf Cellulosegewebe klare, blaue Drucke und Färbungen mit ausgezeichneten Echtheiten.

**Patentansprüche**

1. Farbstoffe der Formel

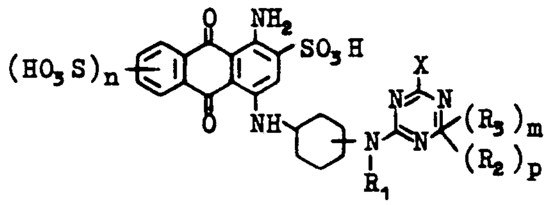

worin

$n$ = 0 oder 1

$m, p$ = 0 oder 1, wobei $m + p = 1$

X = Cl oder Br

$R_1$ = H oder Substituent

$R_2$ = $NH_2$, mindestens eine wasserlöslichende Gruppe aufweisendes Alkylamino, Dialkylamino oder Aralkylamino, wobei unter wasserlöslichmachender Gruppe $SO_3H$, $OSO_3H$ oder COOH zu verstehen ist.

$R_3$ = $R_2$ oder gegebenenfalls substituiertes Arylamino,

wobei

für $n = 0$ $p = 1$ und für $n = 1$ $m = 1$ ist.

2. Farbstoffe der Formel

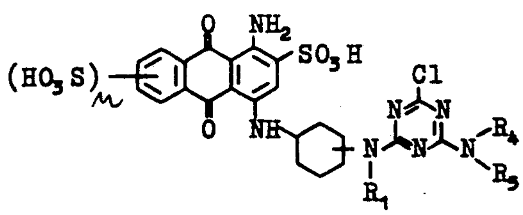

worin

$R_1$ = H oder $C_1$-$C_4$-Alkyl

$R_4$, $R_5$ = H oder $C_1$-$C_4$-Alkyl

wobei mindestens einer der Alkylreste $R_4$ oder $R_5$ eine $SO_3H$-, $OSO_3H$- oder COOH-Gruppe tragen muß,
n = 0 oder 1.

3. Farbstoffe der Formel

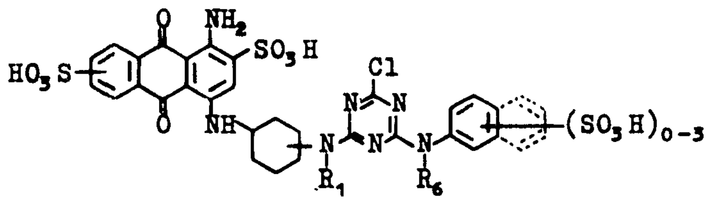

worin
$R_6$ = H oder $C_1$-$C_4$-Alkyl
und $R_1$ die in Anspruch 2 angegebene Bedeutung hat.

4. Farbstoffe der Formel

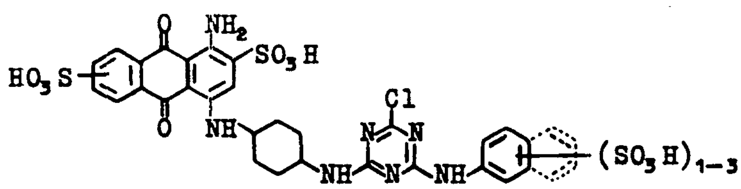

5. Verwendung der Farbstoffe der Ansprüche 1-5 zum Färben und Bedrucken hydroxylgruppenhaltiger und amidgruppenhaltiger Fasermaterialien.

6. Mit den Farbstoffen der Ansprüche 1-5 bedruckte und gefärbte Fasermaterialien.

Europäisches Patentamt

# EUROPÄISCHER RECHERCHENBERICHT

0012342

Nummer der Anmeldung
EP 79 10 4926

| EINSCHLÄGIGE DOKUMENTE | | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| X | CH - A - 471 207 (BAYER)<br>* Anspruch; Spalte 2, Zeile 19; Zeilen 33,34; Spalte 5, Zeilen 66-67; Spalte 6, Zeilen 43-44 *<br>--<br>FR - A - 2 370 781 (BAYER)<br>* Anspruch 1 *<br>---- | 1-6<br><br><br><br>1 | C 09 B 62/06<br>D 06 P 3/66<br>3/10 |

RECHERCHIERTE SACHGEBIETE (Int. Cl. ³)

C 09 B 62/06
62/04
62/024
62/022
62/02
62/004
62/002
62/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 21-03-1980 | GINESTET |